# EUROPEAN PATENT APPLICATION

(11) **EP 4 436 151 A1**
(43) Date of publication of application: **25.09.2024**
(21) Application number: 24164425.1
(22) Date of filing: 19.03.2024
(51) Int. Cl.: H04M 3/00, H04M 3/56

(54) **AUDIO PROCESSING SYSTEM AND AUDIO PROCESSING METHOD**

(30) Priority: 23.03.2023 CN 202310289671
(71) Applicant: Optoma Coporation, New Taipei City 231633 (TW)
(72) Inventor: Lin, Jung-Chang, 231633 New Taipei City (TW); Huang, Shih-Wei, 231633 New Taipei City (TW)
(74) Representative: Ter Meer Steinmeister & Partner

(57) **Abstract**

An audio processing method during a conference comprising capturing a first audio signal and transmitting the first audio signal to a first electronic device by a first terminal device; capturing a second audio signal and transmitting the second audio signal to the first electronic device by a second terminal device; performing signal processing on the first audio signal and the second audio signal to generate a first processed audio signal and transmitting the first processed audio signal to a selected device by the first electronic device, wherein the selected device is one of the first terminal device and the second terminal device; and transmitting the first processed audio signal to a remote system by the selected device. Prevent echo caused by co-located terminal devices emitting sounds at the same time during the conference.

## Description

This application claims the priority benefit of China application serial no. 202310289671.3 filed on March 23, 2023. The entirety of the above-mentioned patent application is hereby incorporated by reference herein and made a part of this specification.

### BACKGROUND

### Technical Field

The disclosure relates to a signal processing technology, and particularly relates to an audio processing system and an audio processing method.

### Description of Related Art

When conducting a video conference, if multiple participants of the video conference are in a same space, and each participant participates in the video conference through a different terminal device, a microphone of each terminal device may probably receive sounds emitted by the other terminal devices in the same space, which in turn leads to generation of echoes. In order to avoid the above problem, each participant needs to turn off the microphone of his own terminal device when others are speaking, or multiple participants need to share a same terminal device to participate the video conference. The aforementioned factors make it very inconvenient to implement a multi-person video conference.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

The disclosure is directed to an audio processing system and an audio processing method, which prevent multiple terminal devices in a same space from emitting sounds at a same time to cause generation of echoes.

The object is solved by the features of the independent claims. Preferred embodiments are given in the dependent claims.

The disclosure provides an audio processing system including a first terminal device, a second terminal device and a first electronic device. The first electronic device is communicatively connected to the first terminal device and the second terminal device. The first terminal device is configured to capture a first audio signal and transmit the first audio signal to the first electronic device. The second terminal device is configured to capture a second audio signal and transmit the second audio signal to the first electronic device. The first electronic device is configured to perform a signal processing on at least one of the first audio signal and the second audio signal to generate a first processed audio signal, and transmit the first processed audio signal to a selected device, wherein the selected device is one of the first terminal device and the second terminal device. The selected device is configured to transmit the first processed audio signal to a remote system.

In an embodiment of the disclosure, the first electronic device may be configured to perform an audio mixing processing on the first audio signal and the second audio signal to generate the first processed audio signal.

In an embodiment of the disclosure, the first terminal device may be configured to detect whether the first terminal device is communicatively connected to the first electronic device and detect whether the first terminal device is executing a video conference software and transmit the first audio signal to the first electronic device in response to the first terminal device being communicatively connected to the first electronic device and execute the video conference software.

In an embodiment of the disclosure, the first terminal device may include a sound receiver and a sound receiving program.

In response to the first terminal device being communicatively connected to the first electronic device and executing the video conference software, the sound receiving program may be configured to be executed to turn on the sound receiver and receive and store the first processed audio signal from the first electronic device in response to the first terminal device being the selected device.

In an embodiment of the disclosure, the video conference software may be configured to be executed to read the first processed audio signal of the sound receiving program.

In an embodiment of the disclosure, the first electronic device may be configured to execute a terminal device selection process.

The terminal device selection process may include detecting a first connection state of the first terminal device and a second connection state of the second terminal device.

In response to the first connection state being superior to the second connection state, the first electronic device may be configured to select the first terminal device as the selected device and transmit the first processed audio signal to the first terminal device.

In response to the second connection state being superior to the first connection state, the first electronic device may be configured to select the second terminal device as the selected device, and transmit the first processed audio signal to the second terminal device.

In an embodiment of the disclosure, the first electronic device may be configured to execute to detect whether a connection state of the selected device is abnormal and re-execute the terminal device selection process in response to the connection state of the selected device being abnormal.

In an embodiment of the disclosure, the first connection state may include a connection signal between the first terminal device and the remote system, and the second connection state may include a connection signal between the second terminal device and the remote system.

In an embodiment of the disclosure, the selected device further may include a speaker, and the selected device is configured to execute to receive a response audio signal corresponding to the first processed audio signal and output an audio according to the response audio signal through the speaker.

In an embodiment of the disclosure, the first electronic device may include a speaker, and the first electronic device is configured to execute to receive a response audio signal corresponding to the first processed audio signal and output an audio according to the response audio signal through the speaker.

In an embodiment of the disclosure, the remote system may include a third terminal device. The third terminal device is communicatively connected to the selected device, and/or may receive the first processed audio signal from the selected device.

In an embodiment of the disclosure, in response to receiving the first processed audio signal, the third terminal device may transmit the response audio signal corresponding to the first processed audio signal to the selected device.

In an embodiment of the disclosure, the remote system further may include a fourth terminal device and a second electronic device.

The second electronic device may be communicatively connected to the third terminal device and the fourth terminal device.

The third terminal device may be configured to capture a third audio signal and transmit the third audio signal to the second electronic device.

The fourth terminal device may be configured to capture a fourth audio signal and transmit the fourth audio signal to the second electronic device.

The second electronic device may be configured to perform signal processing on the third audio signal and the fourth audio signal to generate a second processed audio signal, and/or transmit the second processed audio signal to the third terminal device, wherein the response audio signal includes the second processed audio signal.

The disclosure may provide an audio processing method adapted to an audio processing system. The audio processing system may include a first terminal device, a second terminal device and a first electronic device.

The audio processing method may include: capturing a first audio signal and transmitting the first audio signal to the first electronic device by the first terminal device; capturing a second audio signal and transmitting the second audio signal to the first electronic device by the second terminal device; performing signal processing on the first audio signal and the second audio signal by the first electronic device to generate a first processed audio signal and transmitting the first processed audio signal to a selected device, wherein the selected device is one of the first terminal device and the second terminal device; and transmitting the first processed audio signal to a remote system by the selected device.

Based on the above description, the audio processing system and audio processing method of the disclosure are adapted to prevent the sound receiver of the terminal device from receiving audio signals from different sound sources at the same time point, thereby preventing the audio signal output by the terminal device from being interfered to cause an echo.

Other objectives, features and advantages of the disclosure will be further understood from the further technological features disclosed by the embodiments of the disclosure wherein there are shown and described preferred embodiments of this disclosure, simply by way of illustration of modes best suited to carry out the disclosure.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic diagram illustrating an audio processing system according to an embodiment of the disclosure.
FIG. 2 is a schematic diagram illustrating an electronic device according to an embodiment of the disclosure.
FIG. 3 is a schematic diagram illustrating a terminal device according to an embodiment of the disclosure.
FIG. 4 is a signal transmission diagram between various devices in a local system and a remote system according to an embodiment of the disclosure.
FIG. 5 is a flowchart illustrating a sound receiving program configuring a sound receiver according to an embodiment of the disclosure.
FIG. 6 is a signal transmission diagram between various devices in the remote system and the local system according to an embodiment of the disclosure.
FIG. 7 is a flowchart illustrating an audio processing method according to an embodiment of the disclosure.

### DESCRIPTION OF THE EMBODIMENTS

In the following detailed description of the preferred embodiments, reference is made to the accompanying drawings which form a part hereof, and in which are shown by way of illustration specific embodiments in which the disclosure may be practiced. In this regard, directional terminology, such as "top," "bottom," "front," "back," etc., is used with reference to the orientation of the Figure(s) being described. The components of the disclosure can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the disclosure. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

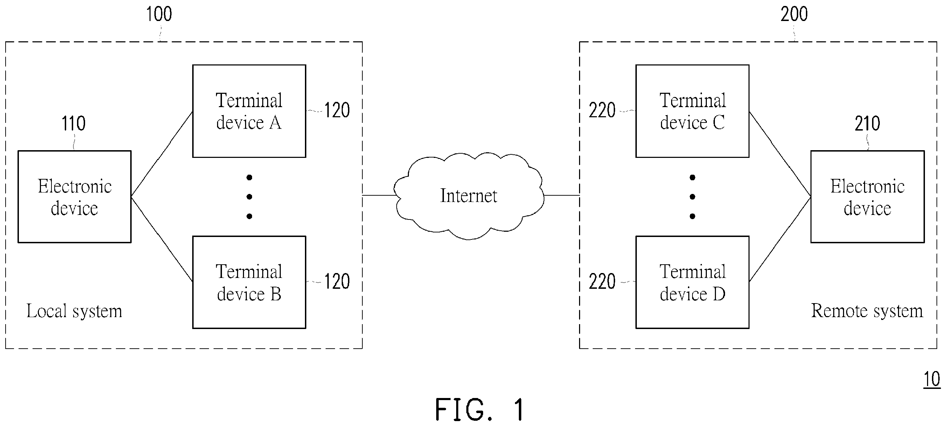

FIG. 1 is a schematic diagram illustrating an audio processing system 10 according to an embodiment of the disclosure. The audio processing system 10 may include a local system 100. The local system 100 may include an electronic device 110 and a plurality of terminal devices 120, where the electronic device 110 and the plurality of terminal devices 120 may be set in a same field (for example, a conference room or a meeting room likes a physical restricted space). A number of terminal devices 120 may be any positive integer determined according to user's requirements. For example, the plurality of terminal devices 120 may include a terminal device A and a terminal device B. The electronic device 110 and the plurality of terminal devices 120 may communicate with each other through a same local area network. The local system 100 may be communicatively connected with a remote system 200 via the Internet or a wide area network.

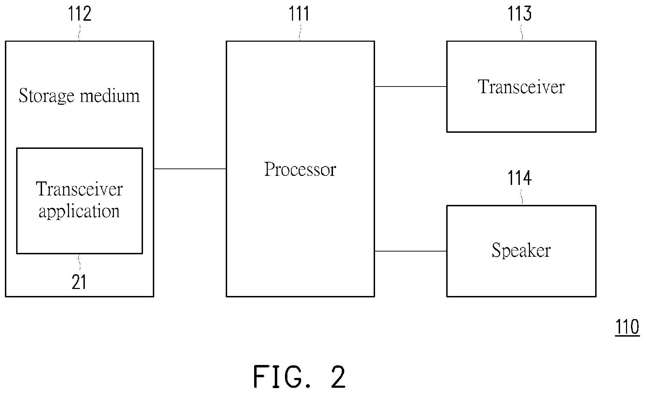

FIG. 2 is a schematic diagram illustrating an electronic device 110 according to an embodiment of the disclosure. The electronic device 110 is, for example, a server, a projector, a display device or an interactive flat panel (IFP). IFP is a large touch display device. The electronic device 110 may include a processor 111, a storage medium 112 and a transceiver 113. In an embodiment, the electronic device 110 may further include a speaker 114.

The processor 111 is, for example, a central processing unit (CPU), or other programmable general purpose or special purpose micro control unit (MCU), microprocessor, digital signal processor (DSP), programmable controller, application specific integrated circuit (ASIC), graphics processing unit (GPU), image signal processor (ISP), image processing unit (IPU), arithmetic logic unit (ALU), complex programmable logic device (CPLD), field programmable gate array (FPGA) or other similar components or a combination of the above components. The processor 111 may be coupled to the storage medium 112, the transceiver 113 and the speaker 114, and access and execute a plurality of modules and various applications stored in the storage medium 112.

The storage medium 112 is, for example, any type of fixed or removable random access memory (RAM), read-only memory (ROM), flash memory, hard disk (HDD), solid state disk (SSD) or similar components or a combination of the above components, and is used to store a plurality of modules or various applications that may be executed by the processor 111. In the embodiment, the storage medium 112 may store a transceiver application 21. The transceiver application 21 may be applied by the processor 111 to execute various functions of the electronic device 110.

The transceiver 113 transmits and receives signals in a wireless or wired manner. The speaker 114 may also perform operations such as low noise amplification, impedance matching, frequency mixing, up or down frequency conversion, filtering, amplification, etc. The electronic device 110 may be communicatively connected to the terminal device 120 or the remote system 200 through the transceiver 113.

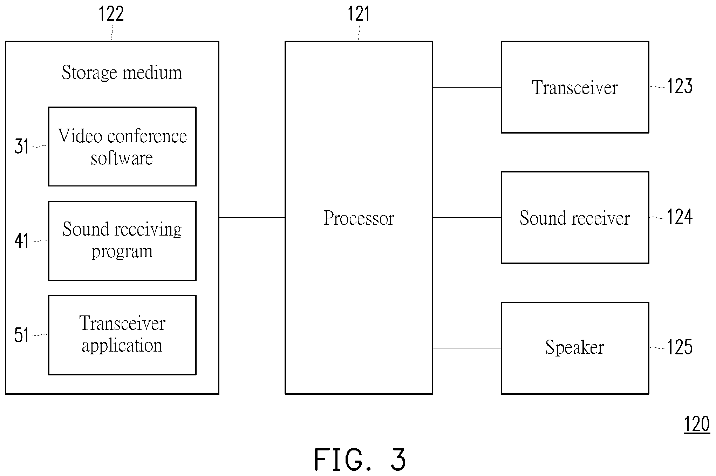

FIG. 3 is a schematic diagram illustrating the terminal device 120 according to an embodiment of the disclosure. The terminal device 120 is, for example, a personal computer, a notebook computer, a tablet computer or a smart phone. The terminal device 120 may include a processor 121, a storage medium 122, a transceiver 123, a sound receiver 124 and a speaker 125.

The processor 121 is, for example, a central processing unit, or other programmable general-purpose or special-purpose microcontroller unit, microprocessor, digital signal processor, programmable controller, special application integrated circuit, graphics processor, image signal processor, image processing unit, arithmetic logic unit, complex programmable logic device, field programmable logic gate array or other similar components or a combination of the above components. The processor 121 may be coupled to the storage medium 122, the transceiver 123, the sound receiver 124 and the speaker 125, and access and execute a plurality of modules and various applications stored in the storage medium 122.

The storage medium 122 is, for example, any type of fixed or removable random access memory, read-only memory, flash memory, hard disk drive, solid state disk or similar components or a combination of the above components, and is used to store a plurality of modules or various applications that may be executed by the processor 121. In the embodiment, the storage medium 122 may store a plurality of modules including a video conference software 31, a sound receiving program 41, a transceiver application 51, etc. The transceiver application 51 also is at least one program. The transceiver application 51 may be applied by the processor 121 to execute various functions of the terminal device 120 (for example: installation of the sound receiving program 41).

The transceiver 123 transmits and receives signals in a wireless or wired manner. The transceiver 123 may also perform operations such as low noise amplification, impedance matching, frequency mixing, up or down frequency conversion, filtering, amplification, etc. The terminal device 120 may be communicatively connected to the electronic device 110 or the remote system 200 through the transceiver 123.

The sound receiver 124 is, for example, a physical microphone, such as a condenser microphone, an electret condenser microphone (ECM) or a micro-electro-mechanical systems (MEMS) microphone. The sound receiver 124 may be used for receiving audio signals.

As shown in FIG. 1, the audio processing system 10 may further include a remote system 200. The remote system 200 and the local system 100 are set in different fields. The remote system 200 may include an electronic device 210 and one or a plurality of terminal devices 220, where the electronic device 210 and the one or more terminal devices 220 may be set in a same field (for example, a conference room or a meeting room likes a physical restricted space). A number of the terminal devices 220 may be any positive integer determined according to user's requirements. The one or more terminal devices 220 may include a terminal device C and a terminal device D. The electronic device 210 and one or more terminal devices 220 can may communicate with each other through a same local area network. The remote system 200 may be connected to the local system 100 through the Internet or a wide area network. In an embodiment, the remote system 200 may only include one terminal device 220. The structure and function of electronic device 210 are similar to that of the electronic device 110, and the structure and function of the terminal device 220 are similar to that of the terminal device 120. Therefore, the structure and function of the electronic device 210 or the terminal device 220 will not be repeated here.

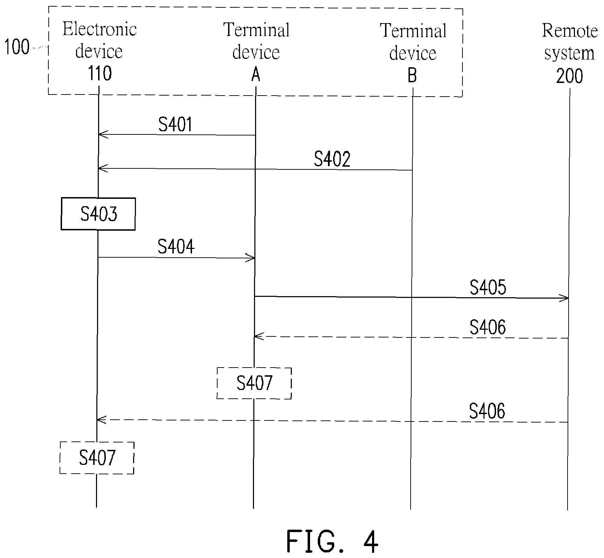

FIG. 4 is a signal transmission diagram between various devices in the local system 100 and the remote system 200 according to an embodiment of the disclosure. In step S401, the transceiver application 51 of the terminal device A may capture an audio signal through the sound receiver 124 and transmit the audio signal to the electronic device 110. In step S402, the transceiver application 51 of the terminal device B may capture an audio signal through the sound receiver 124 and transmit the audio signal to the electronic device 110. The audio signal captured by the terminal device A and the audio signal captured by the terminal device B may be captured at the same time point.

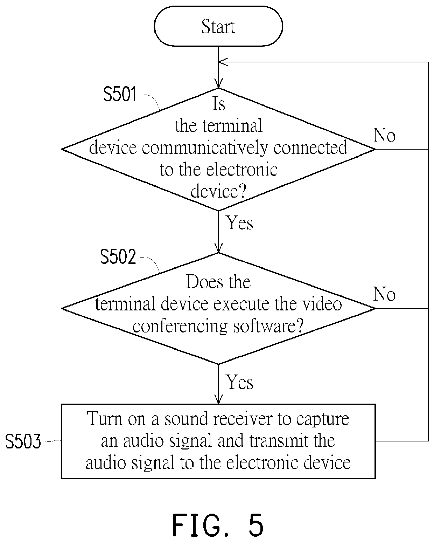

In an embodiment, the sound receiving program 41 of the terminal device 120 may be configured to enable the sound receiver 124 or disable the sound receiver 124. FIG. 5 is a flowchart illustrating the sound receiving program 41 configuring the sound receiver 124 according to an embodiment of the disclosure. In step S501, the sound receiving program 41 may detect whether the terminal device 120 is communicatively connected to the electronic device 110. If the terminal device 120 has been communicatively connected to the electronic device 110, step S502 is executed. If the terminal device 120 is not communicatively connected to the electronic device 110, step S501 is re-executed.

In step S502, the sound receiving program 41 may detect whether the terminal device 120 executes the video conferencing software 31. If the terminal device 120 has already executed the video conference software 31, step S503 is executed. If the terminal device 120 has not yet executed the video conference software 31, step S501 is re-executed.

In step S503, the sound receiving program 41 may automatically turn on the sound receiver 124 to capture an audio signal through the sound receiver 124. Accordingly, a user of the terminal device 120 does not need to turn on the sound receiver 124 manually. Then, the transceiver application 51 may transmit the audio signal to the electronic device 110 through the transceiver 123.

In an embodiment, the terminal device 120 may automatically set an input audio source of the video conference software 31 as the sound receiving program 41. In another embodiment, the user may switch the input audio source of the video conference software 31 of the terminal device 120 to the sound receiving program 41 or the sound receiver 124.

Referring back to FIG. 4, in step S403, the electronic device 110 may perform signal processing on the audio signal from the terminal device A and the audio signal from the terminal device B to generate a first processed audio signal. Specifically, the processor 111 of the electronic device 110 may perform an audio mixing processing on a plurality of audio signals (i.e., the audio signal from the terminal device A and the audio signal from the terminal device B) to generate the first processed audio signal. In an embodiment, the processor 111 of the electronic device 110 may first shift time points of the audio signal from the terminal device A and the audio signal from the terminal device B in consideration of the signal transmission delay, and then perform the audio mixing process.

In step S404, the transceiver application 21 of the electronic device 110 may transmit the first processed audio signal to a selected device via the transceiver 113, where the selected device is, for example, one of the terminal device A and the terminal device B. In this e embodiment, it is assumed that the selected device is the terminal device A. In response to being selected as the selected device by the electronic device 110, the terminal device A may receive and store the first processed audio signal from the electronic device 110. More specifically, the transceiver application 51 of the terminal device A may receive the first processed audio signal from the electronic device 110 through the transceiver 123, and the transceiver application 51 may transmit the first processed audio signal to the sound receiving program 41.

In an embodiment, the electronic device 110 may be configured to execute a terminal device selection process to select the selected device from a plurality of terminal devices 120 (for example: the terminal device A and the terminal device B). Specifically, when executing the terminal device selection process, the electronic device 110 may detect a connection state of the terminal device A and a connection state of the terminal device B. The connection state of the terminal device A may be related to a connection signal between the terminal device A and the remote system 200, and the connection state of the terminal device B may be related to a connection signal between the terminal device B and the remote system 200. For example, the connection state of the terminal device A may be determined by a received signal strength indication (RSSI) or a quality of service (QoS) of the connection signal between the terminal device A and the remote system 200, and the connection state of the terminal device B may be determined by an RSSI or a QoS of the connection signal between the terminal device B and the remote system 200. If the connection state of the terminal device A is superior to the connection state of the terminal device B (for example, the RSSI of the terminal device A is greater than the RSSI of the terminal device B), the electronic device 110 may select the terminal device A as the selected device. Comparatively, if the connection state of the terminal device B is superior to the connection state of the terminal device A (for example: the RSSI of the terminal device B is greater than the RSSI of the terminal device A), the electronic device 110 may select the terminal device B as the selected device.

In an embodiment, the electronic device 110 may periodically detect the connection state of the selected device (for example: the terminal device A or the terminal device B), for example, the connection state is abnormal such as disconnected or signal transmission is too slow, etc. If the connection state of the selected device is abnormal, the electronic device 110 may re-execute the terminal device selection process to select a new selected device, thus ensuring the quality of the video conference. In step S405, the selected device (for example: the terminal device A) may send the first processed audio signal to the remote system 200. Specifically, the video conference software 31 of the terminal device A may be configured to execute reading the first processed audio signal of the sound receiving program 41, and transmitting the first processed audio signal to the video conference software of the terminal device 220 of the remote system 200. Thereafter, the video conference software of the terminal device 220 of the remote system 200 may transmit back a response audio signal corresponding to the first processed audio signal to the local system 100. Based on the above description, even if the multiple terminal devices 120 of the local system 100 have captured the audio signal, the video conference software of the remote system 200 will only output the single first processed audio signal. Accordingly, the output audio quality of the video conference software of the remote system 200 may be significantly improved.

In an embodiment, the response audio signal transmitted back from the remote system 200 to the local system 100 may be played to participants of the video conference by the selected device (for example: the terminal device A). To be specific, in step S406, the selected device (for example, the terminal device A) may receive the response audio signal corresponding to the first processed audio signal from the remote system 200. In step S407, the selected device (for example: the terminal device A) may output/play audio according to the response audio signal through the speaker 125.

In an embodiment, the response audio signal transmitted back from the remote system 200 to the local system 100 may also be played by the electronic device 110 to the participants of the video conference. Specifically, in step S406, the electronic device 110 may receive the response audio signal corresponding to the first processed audio signal from the remote system 200. In the case that the electronic device 110 has no direct communication connection with the remote system 200, after the selected device (for example: the terminal device A) receives the response audio signal from the remote system 200, the selected device transmits the response audio signal to the electronic device 110 through the transceiver 123 thereof. In step S407, the electronic device 110 may output audio according to the response audio signal through the speaker 114.

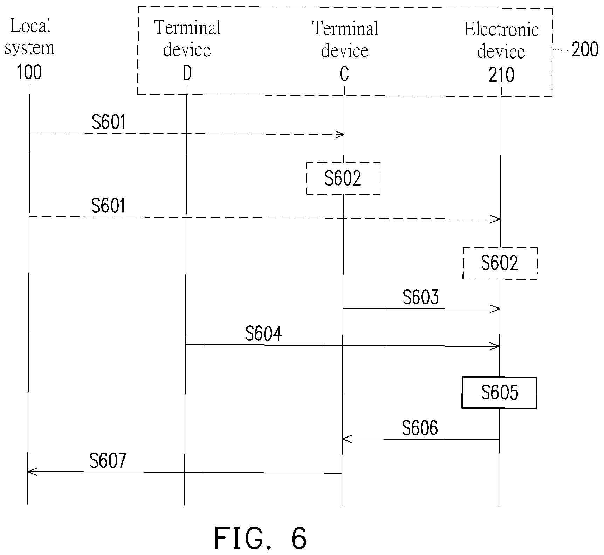

FIG. 6 is a signal transmission diagram between various devices in the remote system 200 and the local system 100 according to an embodiment of the disclosure. The selected device (for example, the terminal device A) of the local system 100 may transmit the first processed audio signal to the remote system 200.

In an embodiment, the first processed audio signal transmitted from the local system 100 to the remote system 200 may be played by a selected device of the remote system 200 to the participants of the video conference, where the selected device is, for example, one of a plurality of terminal devices (for example: the terminal device C and the terminal device D) of the remote system 200. In the embodiment, it is assumed that the selected device is the terminal device C, in step S601, the selected device (i.e., the terminal device C) may receive and store the first processed audio signal from the local system 100. In step S602, the selected device (i.e., the terminal device C) may output audio according to the first processed audio signal through the speaker of the selected device.

The electronic device 210 may be configured to execute the terminal device selection process to select the selected device from the plurality of terminal devices 220 (i.e., the terminal device C and the terminal device D). Specifically, when executing the terminal device selection process, the electronic device 210 may detect a connection state of the terminal device C and a connection state of the terminal device D. The connection state of the terminal device C may be related to a connection signal between the terminal device C and the local system 100, and the connection state of the terminal device D may be related to a connection signal between the terminal device D and the local system 100. For example, the connection state of the terminal device C may be determined by an RSSI or a QoS of the connection signal between the terminal device C and the local system 100, and the connection state of the terminal device D may be determined by an RSSI or a QoS of the connection signal between the terminal device D and the local system 100. If the connection state of the terminal device C is superior to the connection state of the terminal device D (for example, the RSSI of the terminal device C is greater than the RSSI of the terminal device D), the electronic device 210 may select the terminal device C as the selected device. Comparatively, if the connection state of the terminal device D is superior to the connection state of the terminal device C (for example: the RSSI of the terminal device D is greater than the RSSI of the terminal device C), the electronic device 210 may select the terminal device D as the selected device. In an embodiment, the electronic device 210 may detect whether the connection state of the selected device (for example: the terminal device C or the terminal device D) is abnormal. If the connection state of the selected device is abnormal, the electronic device 210 may re-execute the terminal device selection process.

In an embodiment, the first processed audio signal transmitted from the local system 100 to the remote system 200 may also be played by the electronic device 210 of the remote system 200 to the participants of the video conference. Specifically, in step S601, the electronic device 210 may receive and store the first processed audio signal from the local system 100. In step S602, the electronic device 210 may output audio according to the first processed audio signal through the speaker of the electronic device 210.

In step S603, the sound receiving program of the terminal device C may capture an audio signal through a sound receiver of the terminal device C, and transmit the audio signal to the electronic device 210. In step S604, the sound receiving program of the terminal device D may capture an audio signal through a sound receiver of the terminal device D, and transmit the audio signal to the electronic device 210. The audio signal captured by the terminal device C and the audio signal captured by the terminal device D may be captured at a same time point. In an embodiment, the sound receiving program of the terminal device 220 may be configured to enable or disable the sound receiver of the terminal device 220 according to a process similar to that shown in FIG. 5.

In step S605, the electronic device 210 may perform signal processing on the audio signal from the terminal device C and the audio signal from the terminal device D to generate a second processed audio signal. Specifically, the processor of the electronic device 210 may perform an audio mixing processing on multiple audio signals (i.e., the audio signal from the terminal device C and the audio signal from the terminal device D) to generate the second processed audio signal.

In step S606, the electronic device 210 may transmit the second processed audio signal to the selected device (i.e., the terminal device C). In response to the terminal device C being selected by the electronic device 210 as the selected device, the terminal device C may receive and store the second processed audio signal from the electronic device 210.

In step S607, the selected device (i.e., the terminal device C) may transmit a response audio signal to the local system 100 (for example: the selected device or the electronic device 110 of the local system 100), where the response audio signal may include the second processed audio signal.

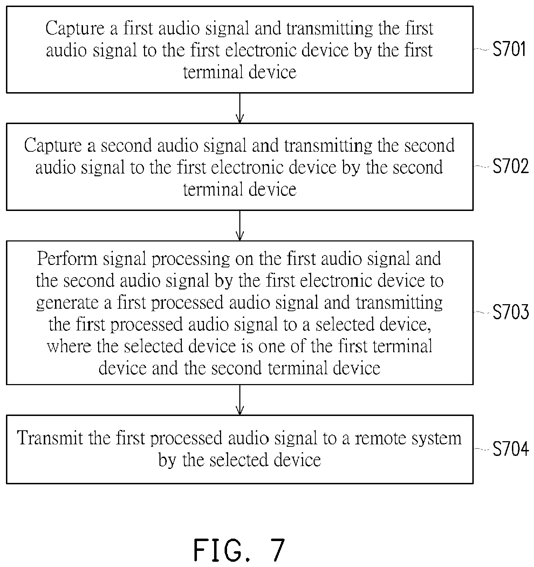

FIG. 7 is a flowchart illustrating an audio processing method according to an embodiment of the disclosure, where the audio processing method is applicable to the audio processing system 10 shown in FIG. 1. In step S701, a first audio signal is captured by a first terminal device, and the first audio signal is transmitted to a first electronic device. In step S702, a second audio signal is captured by a second terminal device, and the second audio signal is transmitted to the first electronic device. In step S703, the first electronic device performs signal processing on the first audio signal and the second audio signal to generate a first processed audio signal, and transmits the first processed audio signal to a selected device, where the selected device is one of the first terminal device and the second terminal device. In step S704, the first processed audio signal is transmitted to a remote system by the selected device.

Referring to FIG. 1, another embodiment of the discourse, a first terminal device A 120 comprises a first sound receiver 124 and a first speaker 125. A second terminal device B 120 comprises a second sound receiver 124 and a second speaker 125. A first electronic device 110 comprises a third speaker 114. One of the first terminal device A 120 and the second terminal device B 120 is configured to receive a response audio signal from remote system, and one of the first speaker 125 of the first terminal device A 120, the second speaker 125 of the second terminal device B 120 and the third speaker 114 is configured to play audio according to the response audio signal.

In summary, in the disclosure, each terminal device in a same field may capture an audio signal through the sound receiver, and transmit the audio signal to the electronic device. The electronic device may perform an audio mixing processing on a plurality of audio signals from a plurality of terminal devices to combine the plurality of audio signals into a single processed audio signal. The processed audio signal may be transmitted to the remote system through the selected device, and the processed audio signal is played by the remote system for remote conference participants to listen. The audio processing system and the audio processing method of the disclosure may prevent the sound receiver of the terminal device from receiving audio signals from different sound sources at the same time point, thereby preventing the audio signals output by the terminal devices from being interfered to cause echoes. Therefore, each user in the same field may use his own terminal device at his own seat, without sharing the same terminal device for participating the video conference. Each user does not need to turn off the sound receiver of his own terminal device when others are speaking. In addition, the quality of the processed audio signal received by the user of the remote system from the local system is good, and a phenomenon of uneven volume is avoided.

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby to enable persons skilled in the art to understand the disclosure for various embodiments and with various modifications as are suited to the particular use or implementation contemplated. It is intended that the scope of the disclosure be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the spirit and scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by persons skilled in the art without departing from the scope of the disclosure as defined by the following claims. Moreover, no element and component in the present disclosure is intended to be dedicated to the public regardless of whether the element or component is explicitly recited in the following claims.

## Claims

1. An audio processing system, comprising a first terminal device (A), a second terminal device (B), and a first electronic device (110), wherein the first electronic device (110) is communicatively connected to the first terminal device (A) and the second terminal device (B), wherein
the first terminal device (A) is configured to capture a first audio signal and transmit the first audio signal to the first electronic device (110),
the second terminal device (B) is configured to capture a second audio signal and transmit the second audio signal to the first electronic device (110),
the first electronic device (110) is configured to perform a signal processing on at least one of the first audio signal and the second audio signal to generate a first processed audio signal and transmit the first processed audio signal to a selected device, wherein the selected device is one of the first terminal device (A) and the second terminal device (B), and
the selected device is configured to transmit the first processed audio signal to a remote system (200).

2. The audio processing system according to claim 1, wherein the first electronic device (110) is configured to perform an audio mixing processing on the first audio signal and the second audio signal to generate the first processed audio signal.

3. The audio processing system according to claim 1 or 2, wherein the first terminal device (A) is configured to detect whether the first terminal device (A) is communicatively connected to the first electronic device (110) and detect whether the first terminal device (A) is executing a video conference software and the first terminal device (A) is configured to transmit the first audio signal to the first electronic device (110) in response to the first terminal device (A) being communicatively connected to the first electronic device (110) and execute the video conference software.

4. The audio processing system according to claim 3, wherein the first terminal device (A) comprises a sound receiver (124) and a sound receiving program (41), in response to the first terminal device (A) being communicatively connected to the first electronic device (110) and executing the video conference software, the sound receiving program (41) is configured to be executed to turn on the sound receiver (124) and receive and store the first processed audio signal from the first electronic device (110) in response to the first terminal device (A) being the selected device.

5. The audio processing system according to claim 4, wherein the video conference software is configured to be executed to read the first processed audio signal of the sound receiving program (41).

6. The audio processing system according to any one of the preceding claims, wherein the first electronic device (110) is configured to execute a terminal device selection process, wherein the terminal device selection process comprises to detect a first connection state of the first terminal device (A) and a second connection state of the second terminal device (B), and to select the first terminal device (A) as the selected device and transmit the first processed audio signal to the first terminal device (A) in response to the first connection state being superior to the second connection state or to select the second terminal device (B) as the selected device and transmitting the first processed audio signal to the second terminal device (B) in response to the second connection state being superior to the first connection state.

7. The audio processing system according to claim 6, wherein the first electronic device (110) is configured to be executed to detect whether a connection state of the selected device is abnormal and re-execute the terminal device selection process in response to the connection state of the selected device being abnormal.

8. The audio processing system according to claim 6 or 7, wherein the first connection state comprises a connection signal between the first terminal device (A) and the remote system (200), and the second connection state comprises a connection signal between the second terminal device (B) and the remote system (200).

9. The audio processing system according to any one of the preceding claims, wherein the selected device further comprises a speaker (125), and the selected device is configured to be executed to receive a response audio signal corresponding to the first processed audio signal and output audio according to the response audio signal through the speaker (125).

10. The audio processing system according to any one of the preceding claims, wherein the first electronic device (110) comprises a speaker (114), and the first electronic device (110) is configured to execute to receive a response audio signal corresponding to the first processed audio signal, and output audio according to the response audio signal through the speaker (114).

11. The audio processing system according to any one of the preceding claims, wherein the remote system (200) comprises a third terminal device (C), wherein
the third terminal device (C) is communicatively connected to the selected device and receives the first processed audio signal from the selected device.

12. The audio processing system according to claim 11, wherein
in response to receiving the first processed audio signal, the third terminal device (C) is configured to transmit a response audio signal corresponding to the first processed audio signal to the selected device.

13. The audio processing system according to claim 12, wherein the remote system (200) further comprises a fourth terminal device (D) and a second electronic device (210), wherein the second electronic device (210) is communicatively connected to the third terminal device (C) and the fourth terminal device (D), wherein
the third terminal device (C) is configured to capture a third audio signal and transmit the third audio signal to the second electronic device (210);
the fourth terminal device (D) is configured to capture a fourth audio signal and transmit the fourth audio signal to the second electronic device (210); and
the second electronic device (210) is configured to perform signal processing on the third audio signal and the fourth audio signal to generate a second processed audio signal and transmit the second processed audio signal to the third terminal device (C), wherein the response audio signal comprises the second processed audio signal.

14. An audio processing method, adapted to an audio processing system, wherein the audio processing system comprises a first terminal device (A), a second terminal device (B), and a first electronic device(110), wherein the audio processing method comprises:
capturing a first audio signal and transmitting the first audio signal to the first electronic device by the first terminal device (A);
capturing a second audio signal and transmitting the second audio signal to the first electronic device by the second terminal device (B);
performing signal processing on the first audio signal and the second audio signal by the first electronic device (110) to generate a first processed audio signal and transmitting the first processed audio signal to a selected device, wherein the selected device is one of the first terminal device (A) and the second terminal device (B); and
transmitting the first processed audio signal to a remote system (200) by the selected device.
